(19) Europäisches Patentamt
European Patent Office
Office européen des brevets

(11) **EP 1 536 320 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(51) Int Cl.:
***G06F 7/72*** *(2006.01)*

(21) Anmeldenummer: **04027833.5**

(22) Anmeldetag: **24.11.2004**

(54) **Montgomery-Multiplikation mit vergrösserter Operandenlänge**

Montgomery multiplication with longer operand length

Multiplication Montgomery ayant une plus grande longueur d'opérande

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **28.11.2003 DE 10355642**

(43) Veröffentlichungstag der Anmeldung:
**01.06.2005 Patentblatt 2005/22**

(73) Patentinhaber: **Giesecke & Devrient GmbH**
**81677 München (DE)**

(72) Erfinder:
• **Bockes, Markus Dr.**
**81927 München (DE)**
• **Seysen, Martin Dr.**
**80809 München (DE)**

(74) Vertreter: **Dendorfer, Claus et al**
**Dendorfer & Herrmann**
**Patentanwälte Partnerschaft**
**Bayerstrasse 3**
**80335 München (DE)**

(56) Entgegenhaltungen:
**US-A- 5 745 398    US-A- 5 961 578**

• **FISCHER W ET AL: "INCREASING THE BITLENGTH OF A CRYPTO-COPROCESSOR" CRYPTOGRAPHIC HARDWARE AND EMBEDDED SYSTEMS. INTERNATIONAL WORKSHOP, 13. August 2002 (2002-08-13), Seiten 71-81, XP001160522**

**Beschreibung**

Die Erfindung betrifft allgemein das technische Gebiet der maschinellen Ausführung arithmetischer Operationen und spezieller die als Montgomery-Multiplikation bekannte Operation. Die Montgomery-Multiplikation ist in der hier verwendeten Wortwahl eine modulare Multiplikation, deren Ergebnis das mit dem Inversen einer Zweierpotenz multiplizierte Produkt zweier Faktoren ist.

Die Erfindung eignet sich insbesondere zum Einsatz bei kryptographischen Berechnungen, wie sie beispielsweise von tragbaren Datenträgern ausgeführt werden. In der hier verwendeten Wortwahl kann ein tragbarer Datenträger beispielsweise eine Chipkarte oder ein Chipmodul in unterschiedlichen Bauformen oder ein sonstiges ressourcenbeschränktes System sein.

Auf dem Gebiet der Kryptographie werden modulare Multiplikationen beispielsweise bei dem im US-Patent 4,405,829 beschriebenen RSA-Verfahren ausgeführt. Bei diesem Verfahren erfolgt eine modulare Potenzberechnung eines zu ver- oder entschlüsselnden Wertes bezüglich eines Moduls, der das Produkt zweier großer Primzahlen ist. Die modulare Potenzberechnung beinhaltet in der Regel eine Folge modularer Multiplikationen, z.B. Montgomery-Multiplikationen. Da die Sicherheit des RSA-Verfahrens auf der Schwierigkeit beruht, den Modul ohne Zusatzinformationen in die beiden Primzahlen zu faktorisieren, soll der Modul eine möglichst große Stellenanzahl aufweisen.

Aus dem US-Patent 5,961,578 ist ein Verfahren zur effizienten Ausführung von Montgomery-Multiplikationen bekannt, das zur Verwendung in kryptographischen Koprozessoren geeignet ist. Halbleiterchips für tragbare Datenträger, die einen gemäß diesem Patent ausgestalteten Koprozessor aufweisen, sind unter der Bezeichnung "AE4" von der Firma Hitachi, Ltd., Tokio, Japan, erhältlich. Die durch diesen Koprozessor für die Montgomery-Multiplikation bereitgestellte Hardwareunterstützung ist jedoch auf Operanden mit einer Bitlänge von 1024 Bit beschränkt.

Auch bei anderen Koprozessoren besteht in der Regel eine fest vorgegebene Maximallänge für die Operanden und Ergebnisse. Insbesondere im Zusammenhang mit modularer Arithmetik - z.B. der hier betrachteten Montgomery-Multiplikation - ist es nicht einfach, eine solche von der Hardware vorgegebene Längenbegrenzung zu überwinden. Weil jedoch, wie oben erwähnt, die Sicherheit von kryptographischen Verfahren insbesondere von der Schlüssellänge abhängt, besteht in zunehmendem Maße das Bedürfnis, modulare Arithmetik mit einer Operandenlänge auszuführen, die über eine hardwaremäßig vorbestimmte Maximallänge hinausgeht.

Der Konferenzbeitrag "Increasing the bitlength of a crypto-coprocessor" von W. Fischer und J.-P. Seifert, erschienen in dem Tagungsband zum "Workshop on Cryptographic Hardware and Embedded Systems 2002 (CHES 2002)", Band 2523 der Lecture Notes in Computer Science, Springer-Verlag, 2003, Seiten 71 - 81, beschreibt mehrere Verfahren zum Ausführen einer modularen Multiplikation mit ungefähr verdoppelter Stellenanzahl. Diese Verfahren sind jedoch nicht zur Verwendung im Zusammenhang mit Montgomery-Multiplikationen vorgesehen.

US-Patent 5,745,398 offenbart ein Verfahren zur Ausführung einer Montgomery-Multiplikation, wobei die zu multiplizierenden Faktoren $A$, $B$ jeweils m Datenworte zu je k Bits aufweisen.

Die Erfindung hat daher die Aufgabe, eine Technik zum maschinellen Ausführen einer Montgomery-Multiplikation bereitzustellen, die sich insbesondere für lange Operanden eignet. In bevorzugten Ausgestaltungen soll die vorgeschlagene Technik eine bereits vorhandene Hardwareunterstützung, die für Montgomery-Multiplikationen oder Varianten davon mit einer vorbestimmten Stellenanzahl ausgelegt ist, nutzen, um eine Montgomery-Multiplikation mit vergrößerter Stellenanzahl bereitzustellen.

Erfindungsgemäß werden diese Aufgaben ganz oder zum Teil gelöst durch Verfahren mit den Merkmalen des Anspruchs 1, ein Computerprogrammprodukt gemäß Anspruch 18 und einen tragbaren Datenträger gemäß Anspruch 19. Die abhängigen Ansprüche definieren bevorzugte Ausgestaltungen der Erfindung.

Die Erfindung beruht auf der Grundidee, die Montgomery-Multiplikation mit langen Operanden auf mehrere erweiterte Montgomery-Multiplikationen mit geringerer Operandenlänge abzustützen.

In manchen Ausgestaltungen wird die erweiterte Montgomery-Multiplikation auf zwei "gewöhnliche" Montgomery-Multiplikationen derselben Bitlänge abgestützt. Bei diesen beiden Montgomery-Multiplikationen werden die ursprünglichen Faktoren, aber zwei verschiedene Module, verwendet.

Mittels der Montgomery-Multiplikation mit langen Operanden lassen sich beispielsweise umfangreiche kryptographische Berechnungen ausführen. So kann z.B. unter Verwendung der Erfindung eine für den Hitachi-AE4-Prozessor geeignete Implementierung des RSA-Verfahrens mit einer maximalen Schlüssellänge von 2048 Bit geschaffen werden, obwohl die kryptographischen Operationen dieses Prozessors hardwaremäßig auf Operandenlängen von 1024 Bit beschränkt sind.

Im vorliegenden Text ist der Begriff "Bitlänge" stets als Maximalwert für die mit einer vorgegebenen Bitlänge darstellbaren Zahlen - bzw. deren Absolutbetrag - zu verstehen. Mit anderen Worten sind führende 0-Bits zulässig. Die Bitlänge gibt daher z.B. die Registerbreite an, die bei einer Hardwareimplementierung zur Aufnahme des entsprechenden Wertes erforderlich ist. Die Bitlänge der Montgomery-Multiplikation mit langen Operanden wird im folgenden mit $L$ bezeichnet, und die Bitlänge der erweiterten Montgomery-Multiplikation wird mit $l$ bezeichnet. Bevorzugt wird durch das Verfahren erzielt, daß die Bitlänge $L$ ungefähr oder genau doppelt so groß wie die Bitlänge $l$ ist.

In bevorzugten Ausgestaltungen umfaßt die Berechnung einer erweiterten Montgomery-Multiplikation sowohl eine Multiplikation zweier Faktoren als auch eine modulare Reduktion. Die dazu erforderlichen Berechnungen können sequenziell ablaufen oder ganz oder teilweise parallel oder ganz oder teilweise ineinander verzahnt (*interleaved*) ausgeführt werden.

Erfindungsgemäß werden die Faktoren der Montgomery-Multiplikation der Bitlänge $L$ in einzelne Koeffizienten mit jeweils der Bitlänge $l$ aufgespalten. Diese Aufspaltung kann in manchen Ausführungsformen einer $2^l$-adischen Darstellung der Faktoren entsprechen. In anderen Ausführungsformen kann dagegen eine Aufspaltung vorgesehen sein, in deren Stellengewichtung eine Wurzel des Moduls modulo $2^l$ eingeht.

Um den Multiplikationsteil des Verfahrens durchzuführen, werden die Koeffizienten paarweise als Faktoren einer erweiterten Montgomery-Multiplikation multipliziert und in je zwei Werte der Bitlänge $l$ zerlegt. In manchen Ausführungsformen werden hierbei alle Paarkombinationen der Koeffizienten herangezogen, während in anderen Ausgestaltungen manche dieser Teilmultiplikationen eingespart werden, indem z.B. das Karatsuba-Verfahren genutzt wird.

Die Reduktion umfaßt in bevorzugten Ausgestaltungen mehrere - zumindest zwei - Schritte, wobei jeder Reduktionsschritt vorzugsweise mindestens eine erweiterte Montgomery-Multiplikation beinhaltet.

Die erweiterten Montgomery-Multiplikationen werden sowohl bei dem Multiplikationsteil als auch bei dem Reduktionsteil in bevorzugten Ausgestaltungen des Verfahrens mit einem Modul durchgeführt, das entweder den Wert 1 oder den Wert $n_0$ hat. Hierbei ist $n_0$ in unterschiedlichen Ausgestaltungen entweder die geringstwertige $2^l$-adische Stelle des langen Moduls $n$ oder eine Wurzel - die Quadratwurzel oder eine höhere Wurzel - des langen Moduls $n$ modulo $2^l$ oder des Wertes -$n$ modulo $2^l$.

In bevorzugten Ausgestaltungen der erweiterten Montgomery-Multiplikation werden in den beiden zugrundeliegenden "einfachen" Montgomery-Multiplikationen der ursprüngliche Modul $n$ und der Modul $2^l$ - $n$ verwendet. Die beiden Montgomery-Multiplikationen können in beliebiger Reihenfolge oder ganz oder teilweise parallel oder ganz oder teilweise ineinander verzahnt (*interleaved*) ausgeführt werden. Die Ergebnisse werden vorzugsweise in einer Fallunterscheidung weiter ausgewertet.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann ein derartiges Computerprogrammprodukt Programmbefehle enthalten, die bei der Herstellung und/ oder Initialisierung und/ oder Personalisierung eines tragbaren Datenträgers in diesen übertragen werden.

In bevorzugten Ausgestaltungen sind das Computerprogrammprodukt und/oder der tragbare Datenträger mit Merkmalen weitergebildet, die den oben beschriebenen und/oder den in den abhängigen Verfahrensansprüchen genannten Merkmalen entsprechen. Insbesondere kann der Datenträger einen Koprozessor aufweisen, der die Montgomery-Multiplikation hardwaremäßig unterstützt.

Weitere Merkmale, Vorteile und Aufgaben der Erfindung gehen aus der folgenden genauen Beschreibung mehrerer Ausführungsbeispiele und Ausführungsalternativen hervor. Die folgenden Abschnitte enthalten:

Abschnitt A      ein Beispiel einer hardwaremäßig unterstützten Montgomery-Multiplikation nach dem Stand der Technik,

Abschnitt B      ein beispielhaftes Verfahren sowie mehrere Abwandlungen zum Ausführen einer erweiterten Montgomery-Multiplika-- tion,

Abschnitt C      ein beispielhaftes Verfahren sowie mehrere Abwandlungen zum Ausführen einer Montgomery-Multiplikation mit ver-größerter Operandenlänge, bei dem eine $2^l$-adische Darstel-lung der Operanden genutzt wird, und

Abschnitt D      ein beispielhaftes Verfahren sowie mehrere Abwandlungen zum Ausführen einer Montgomery-Multiplikation mit ver-größerter Operandenlänge, bei dem die Operanden in Abhängigkeit von einer Modulwurzel dargestellt werden.

**A. Hardwaremäßig unterstützte Montgomery-Multiplikation**

Die Verfahren gemäß den folgenden Abschnitten B bis D sind in den hier beschriebenen Ausführungsbeispielen der Erfindung dazu vorgesehen, von einem Prozessor eines tragbaren Datenträgers, insbesondere einer Chipkarte (*smart card*) oder eines Chipmoduls, ausgeführt zu werden. Die Verfahren sind dazu in Form von Programmbefehlen implementiert, die in einem ROM oder einem EEPROM oder einem sonstigen Speicher des Datenträgers enthalten sind. Der Datenträger weist ferner einen kryptographischen oder mathematischen Koprozessor auf, der diverse Operationen mit einer vorgegebenen maximalen Stellenanzahl, die beispielsweise 1024 Bit betragen kann, unterstützt.

Eine der von dem Koprozessor unterstützen Operationen ist die Montgomery-Multiplikation. Die Montgomery-Multiplikation ist eine modulare Multiplikation, bei der zwei Faktoren miteinander und mit dem Inversen einer geeigneten Zweierpotenz multipliziert werden. Diese Zweierpotenz kann z.B. der Anzahl der unterschiedlichen mit der vorgegebenen Bitlänge darstellbaren Werten entsprechen. Die Montgomery-Multiplikation kann deutlich effizienter implementiert werden als eine modulare Multiplikation, die aus einer üblichen Multiplikation und einer Division mit Rest zusammengesetzt ist. Ein typisches Anwendungsgebiet für die Montgomery-Multiplikation ist die modulare Exponentiation, wie sie für diverse kryptographische Verfahren, z.B. RSA-Verfahren, benötigt wird.

In Formelschreibweise läßt sich das Ergebnis einer Montgomery-Multiplikation zweier Faktoren $a$ und $b$ bezüglich eines Moduls $n$ als $a \cdot b \cdot 2^{-l} \bmod n$ ausdrücken. Hierbei werden $0 \leq a, b < n < 2^l$ und ein zu $2^l$ teilerfremder Modul $n$ vorausgesetzt. Die letztgenannte Bedingung ist genau dann erfüllt, wenn der Modul $n$ ungerade ist. Eine beispielhafte Implementierung dieser Operation ist als Algorithmus 14.36 in dem Buch Handbook of Applied Cryptography von A. Menzenes, P. van Oorschot und S. Vanstone, CRC Press, Boca Raten, 1997, Seiten 602 - 603, beschrieben.

In der Praxis verwendete Implementierungen der Montgomery-Multiplikation können von der gerade angeführten mathematischen Formulierung geringfügig abweichen. Insbesondere kann vorgesehen sein, daß das Ergebnis nicht vollständig modulo $n$ reduziert, sondern z.B. nur in den mit der Bitlänge $l$ darstellbaren Wertebereich gebracht wird. Bei manchen Implementierungen können auch schwächere Bedingungen an die Operanden gestellt werden, z.B. $a, b, n < 2^l$ statt $a, b < n < 2^l$. Die Bitlänge $l$ entspricht in der Regel der Registerbreite des Koprozessors.

Eine vorteilhafte Implementierung der Montgomery-Multiplikation, die auch in dem US-Patent 5,961,578 beschrieben ist, wird im folgenden mit $MM_l(a, b, n)$ bezeichnet. Für die Operanden $a, b, n$ muß $0 \leq a, b, n < 2^l$ gelten, und $n$ muß ungerade, also teilerfremd zu $2^l$, sein. Es werden dann - z.B. von dem mathematischen Koprozessor des Datenträgers - Berechnungen ausgeführt, die äquivalent zu den folgenden Rechenschritten sind:

$$\text{SETZE} \quad k := -a \cdot b \cdot n^{-1} \bmod 2^l \qquad (A1.1)$$

$$\text{SETZE} \quad w := (a \cdot b + k \cdot n) / 2^l \qquad (A1.2)$$

$$\text{WENN} \quad w \geq 2^l \quad \text{DANN SETZE} \quad w := w - n \qquad (A1.3)$$

$$\text{GIB} \quad w \quad \text{ALS ERGEBNIS AUS} \qquad (A1.4)$$

Das Ergebnis $w$ des Verfahrens ist $MM_l(a, b, n)$. Die Division in Schritt (A1.2) ist stets ohne Rest ausführbar, weil $k$ in Schritt (A1.1) so bestimmt wurde, daß $a \cdot b + k \cdot n$ durch $2^l$ teilbar ist. Nach Schritt (A1.2) gilt $0 \leq w < 2^l + n$ und demzufolge nach Schritt (A1.3) $0 \leq w < 2^l$. Der Ergebniswert $w$ ist also ebenfalls - wie die Faktoren $a$ und $b$ - auf die Bitlänge $l$ beschränkt.

Die Berechnung von $MM_l(a, b, n)$ gemäß den Schritten (A1.1) - (A1.4) ist eine Montgomery-Multiplikation, weil gilt:

$$MM_l(a, b, n) \bmod n = a \cdot b \cdot 2^{-l} \bmod n \qquad (A2)$$

Gleichung (A2) läßt sich auch schreiben als:

$$MM_l(a, b, n) \cdot 2^l = a \cdot b + k' \cdot n \quad \text{für} \quad k' \in \mathbb{Z} \quad \text{mit} \quad -2^l < k' < 2^l \qquad (A3)$$

In Gleichung (A3) hat $k'$ den Wert, auf den $k$ in Schritt (A1.1) gesetzt wurde, falls nach Schritt (A1.2) $w < 2^l$ gilt. Andernfalls hat $k'$ den Wert $k - 2^l$.

## B. Erweiterte Montgomery-Multiplikation

Gemäß einem ersten Ausführungsbeispiel der Erfindung wird eine erweiterte Montgomery-Multiplikation bereitgestellt, die auf die hardwaremäßig implementierte Montgomery-Multiplikation des Prozessors oder Koprozessors, wie im obigen Abschnitt A beschrieben, abgestützt ist. Die erweiterte Montgomery-Multiplikation zweier Faktoren bezüglich eines Moduls liefert zwei Ergebnisse, von denen das eine dem Ergebnis einer "normalen" Montgomery-Multiplikation der beiden Faktoren bezüglich des Moduls entspricht und das andere angibt, um welches Vielfache des Moduls sich das um die Operandenbitlänge nach links verschobene erste Ergebnis von dem Produkt der beiden Faktoren unterscheidet.

Die erweiterte Montgomery-Multiplikation zweier Faktoren $a$ und $b$ bezüglich eines Moduls $n$ wird im folgenden als $XMM_l(a, b, n)$ geschrieben, wobei $l$ eine Obergrenze für die Bitlänge der Operanden $a$, $b$, $n$ angibt. Führende 0-Bits sind zulässig. Für $l \geq 2$ und ganze Zahlen $0 \leq a, b, n < 2^l$ mit ungeradem $n$ wird definiert:

$$XMM_l(a, b, n) = (w, k) \in \mathbb{Z} \times \mathbb{Z}$$
$$\text{mit } 0 \leq k < 2^l \text{ und } w \cdot 2^l = a \cdot b + k \cdot n \qquad (B1)$$

Durch die Definition (B1) sind für alle $a$, $b$, $n$, die die oben genannten Voraussetzungen erfüllen, die Werte $w$ und $k$ eindeutig bestimmt. Ferner gelten für $(w, k) = XMM_l(a, b, n)$ die Beziehungen:

$$0 \leq w < 2^l + n - 1 \qquad (B2)$$

$$w \equiv a \cdot b \cdot 2^{-l} \pmod{n} \qquad (B3)$$

$$MM_l(a, b, n) = \begin{cases} w & \text{falls } w < 2^l \\ w - n & \text{sonst} \end{cases} \qquad (B4)$$

Die Berechnung von $XMM_l(a, b, n)$ wird gemäß dem hier beschriebenen Ausführungsbeispiel auf zwei Montgomery-Multiplikationen $MM_l$ mit den Faktoren $a$ und $b$ und der Bitlänge $l$ abgestützt. Eine dieser $MM_l$-Operationen wird mit dem Modul $n$ ausgeführt. Für die andere $MM_l$-Operation wird der Modul $2^l - n$ verwendet. Der zweite Ergebniswert $k$ von $XMM_l(a, b, n)$ kann dann aus den Ergebnissen der beiden $MM_l$-Operationen berechnet werden.

Insgesamt werden zur Berechnung von $XMM_l(a, b, n)$ für $a, b, n \in \mathbb{Z}$ mit $0 \leq a, b, n < 2^l$ mit ungeradem $n$ und $l \geq 2$ im vorliegenden Beispiel die folgenden Schritte ausgeführt:

$$\text{SETZE } w_1 := MM_l(a, b, n) \qquad (B5.1)$$

$$\text{SETZE } w_2 := MM_l(a, b, 2^l - n) \qquad (B5.2)$$

$$\text{SETZE } \delta := ((w_1 - w_2) \cdot n + a \cdot b) \bmod 4 \text{ mit } 0 \leq \delta < 4 \qquad (B5.3)$$

$$\text{WENN} \quad \delta = 0 \quad \text{DANN} \tag{B5.4}$$

$$\text{SETZE} \quad k := w_1 - w_2 \tag{B5.5}$$

$$\text{SETZE} \quad w := w_1 \tag{B5.6}$$

$$\text{WENN} \quad k < 0 \quad \text{DANN} \tag{B5.7}$$

$$\text{SETZE} \quad k := k + 2^l \tag{B5.8}$$

$$\text{SETZE} \quad w := w + n \tag{B5.9}$$

$$\text{SONST} \quad \text{WENN} \quad \delta = 1 \quad \text{DANN} \tag{B5.10}$$

$$\text{SETZE} \quad k := (w_1 - w_2 - n) \bmod 2^l \tag{B5.11}$$

$$\text{SETZE} \quad w := w_1 \tag{B5.12}$$

$$\text{SONST} \tag{B5.13}$$

$$\text{SETZE} \quad k := (w_1 - w_2 + n) \bmod 2^l \tag{B5.14}$$

$$\text{SETZE} \quad w := w_1 + n \tag{B5.15}$$

$$\text{GIB} \quad (w, k) \quad \text{ALS ERGEBNIS AUS} \tag{B5.16}$$

Das Ergebnis ($w$, $k$) des Verfahrens gemäß den Schritten (B5.1) - (B5.16) ist $\mathrm{XMM}_l(a, b, n)$.

Es versteht sich, daß in Ausführungsalternativen die Reihenfolge der $\mathrm{MM}_l$-Operationen und der weiteren Berechnungsschritte verändert werden kann. In weiteren Ausführungsalternativen ist die Berechnung von $\mathrm{XMM}_l(a, b, n)$ an einen Koprozessor angepaßt, der nicht genau die $\mathrm{MM}_l$-Operation gemäß den Schritten (A1.1) - (A1.4), sondern eine etwas abgewandelte Montgomery-Operation ausführt. Eine solche Anpassung ist auf jeden Fall dann möglich, wenn das Verhalten des Koprozessors hinsichtlich des Werts $k'$ aus Gleichung (A3) bekannt ist.

Um dem Fachmann Abwandlungen und Verbesserungen des Verfahrens gemäß den Schritten (B5.1) - (B5.16) sowie die Anpassung an eine modifizierte $\mathrm{MM}_l$-Operation zu ermöglichen, werden im folgenden einige Grundprinzipien dargestellt, auf denen das Verfahren gemäß den Schritten (B5.1) - (B5.16) beruht.

Für den in Schritt (B5.1) berechneten Wert $w_1$ gilt gemäß (B2) und (B4) $0 \le w_1 < 2^l$, und es gibt gemäß (B1) und (B4) eine ganze Zahl $k_1$ mit $-2^l < k_1 < 2^l$, so daß gilt:

$$w_1 \cdot 2^l = a \cdot b + k_1 \cdot n \tag{B6}$$

Entsprechend gilt für den in Schritt (B5.2) berechneten Wert $w_2$ die Ungleichung $0 \le w_2 < 2^l$, und es gibt eine ganze Zahl $k_2$ mit $-2^l < k_2 < 2^l$, so daß gilt:

$$w_2 \cdot 2^l = a \cdot b + k_2 \cdot (2^l - n) \tag{B7}$$

Indem die Gleichung (B7) von der Gleichung (B6) subtrahiert wird, ergibt sich modulo $2^l$ die Äquivalenz $(k_1 + k_2) \cdot n \equiv 0$. Weil $n$ ungerade ist, muß es eine ganze Zahl $\delta$ mit $k_1 + k_2 = \delta \cdot 2^l$ geben. Wegen $-2^l < k_1 < 2^l$ und $-2^l < k_2 < 2^l$ folgt $\delta \in \{-1, 0, 1\}$, so daß der Wert $\delta$ schon durch seinen Rest modulo 4 eindeutig definiert ist. Es gilt ferner:

$$k_1 > 0, \text{ wenn } \delta > 0$$

$$k_1 < 0, \text{ wenn } \delta < 0 \tag{B8}$$

Durch Einsetzen der Beziehung $k_2 = \delta \cdot 2^l - k_1$ in die Differenz der Gleichungen (B7) und (B6) ergibt sich ferner:

$$k_1 = w_1 - w_2 + \delta \cdot (2^l - n) \tag{B9}$$

Aus (B9) läßt sich unter Berücksichtigung der Tatsache, daß $n \equiv n^{-1} \pmod 4$ für ungerade $n$ gilt, die folgende Beziehung ableiten:

$$\delta \equiv (w_1 - w_2) \cdot n + a \cdot b \pmod 4 \tag{B10}$$

In Schritt (B5.3) des oben beschriebenen Verfahrens wird dieser Wert $\delta$ gemäß Beziehung (B10) berechnet. Es versteht sich, daß die Rechnung in Schritt (B5.3) nicht mit voller Stellenanzahl durchgeführt werden muß, sondern daß es ausreicht, nur jeweils die beiden geringstwertigen Bits aller Zwischenergebnisse zu ermitteln.

Der Wert von $k_1$ folgt nun aus (B9). Aus $w_1$ und $k_1$ lassen sich $w$ und $k$ durch Anwendung der folgenden Äquivalenzen bestimmen, die aus (B1), (B4) und (B6) abgeleitet sind:

$$w_1 = w \quad \Leftrightarrow \quad k_1 = k \quad \Leftrightarrow \quad w < 2^l \tag{B11}$$

$$w_1 = w - n \quad \Leftrightarrow \quad k_1 = k - 2^l \quad \Leftrightarrow \quad w \geq 2^l \tag{B12}$$

Im Hinblick auf den Wert von $w$ ergibt sich:

$$w_1 = w \quad \Leftrightarrow \quad k_1 \geq 0 \tag{B13}$$

In der Fallunterscheidung gemäß den Schritten (B5.4) - (B5.15) werden die Beziehungen (B9) und (B11) - (B13) genutzt, um die Ergebniswerte $w$ und $k$ in den unterschiedlichen Fällen mit möglichst geringem Rechenaufwand zu bestimmen. Insbesondere werden die drei Fälle $\delta = 0$, $\delta = 1$ und $\delta = -1$ unterschieden, um den in der Beziehung (B9) enthaltenen Summanden $\delta \cdot (2^l - n)$ möglichst weitgehend auszuwerten. Ferner wird der Zwischenwert $k_1$ der Beziehung (B9) nicht explizit berechnet, sondern es wird sogleich das Endergebnis $k$ unter Verwendung von (B11) und (B12) bestimmt. Die Beziehung (B13) wird in den Schritten (B5.7) - (B5.9) verwendet. Für $\delta \neq 0$ erübrigt sich wegen Beziehung (B8) in den Schritten (B5.10) - (B5.15) eine Fallunterscheidung bezüglich des Vorzeichens von $k_1$.

Eine vorteilhafte Abwandlung des Verfahrens gemäß den Schritten (B5.1) - (B5.16) ergibt sich für den Spezialfall $w < 2^l$. Wie aus (B1) und (B2) folgt, ist dieser Fall z.B. gegeben, wenn $n = 1$ ist oder wenn $a \cdot b < 2^l$ gilt. Aus (B11) folgt dann $w_1 = w$ und $k_1 = k$, und wegen (B13) ist ein negativer Wert von $k$ ausgeschlossen. Ferner muß wegen (B8) entweder $\delta = 0$ oder $\delta = 1$ gelten. Der Wert $\delta$ braucht daher nicht wie in (B10) modulo 4 berechnet zu werden, sondern eine Rechnung modulo 2 genügt. Die Fallunterscheidung der Schritte (B5.4) - (B5.15) vereinfacht sich dann erheblich. Insgesamt wird das abgewandelte Verfahren zur Berechnung von $XMM_l(a, b, n)$ durch die folgenden Schritte (B14.1) - (B14.9) definiert. Es seien $a, b, n \in \mathbb{Z}$ mit $0 \leq a, b, n < 2^l$ mit ungeradem $n$ und $l \geq 2$, und es gelte $w < 2^l$:

$$\text{SETZE} \quad w_1 := \text{MM}_l(a, b, n) \tag{B14.1}$$

$$\text{SETZE} \quad w_2 := \text{MM}_l(a, b, 2^l - n) \tag{B14.2}$$

$$\text{SETZE} \quad w := w_1 \tag{B14.3}$$

$$\text{SETZE} \quad \delta := (w_1 - w_2 + a \cdot b) \bmod 2 \ \text{ mit } \ 0 \leq \delta < 2 \tag{B14.4}$$

$$\text{WENN} \quad \delta = 0 \ \text{ DANN} \tag{B14.5}$$

$$\text{SETZE} \quad k := w_1 - w_2 \tag{B14.6}$$

$$\text{SONST} \tag{B14.7}$$

$$\text{SETZE} \quad k := (w_1 - w_2 - n) \bmod 2^l \tag{B14.8}$$

$$\text{GIB} \quad (w, k) \ \text{ ALS ERGEBNIS AUS} \tag{B14.9}$$

Die XMM$_l$-Operation ist nicht nur als Grundbaustein für die in den folgenden Abschnitten C und D beschriebenen Montgomery-Multiplikationen mit vergrößerter Operandenlänge, sondern auch für andere Anwendungen nützlich. Eine solche Anwendung ist z.B. die Berechnung des "normalen" Produkts $a \cdot b$ zweier Faktoren $a$, $b$, die je die Bitlänge $l$ aufweisen. Es wird dazu die Operation XMM$_l(a, b, 1)$ ausgeführt; das Ergebnis sei $(w, k)$. Dann gilt nach (B1) $a \cdot b = w \cdot 2^l - k$, und aus (B2) folgt $w < 2^l$. Für die XMM$_l$-Operation kann daher sowohl das Verfahren mit den Schritten (B5.1) - (B5.16) als auch das vereinfachte Verfahren mit den Schritten (B14.1) - (B14.9) verwendet werden. Wenn gewünscht, kann die Binärdarstellung von $a \cdot b$ erhalten werden, indem $w$ um $l$ Stellen nach links geschoben und anschließend $k$ vom Ergebnis subtrahiert wird.

Ein weiterer Anwendungsfall insbesondere für das vereinfachte Verfahren mit den Schritten (B14.1) - (B14.9) sind Operationen der Form XMM$_l(a, 1, n)$. Für das Resultat solcher Operationen gilt ebenfalls $w < 2^l$, weil aus den Beziehungen $w = (a \cdot b + k \cdot n) / 2^l < (2^l + 2^l \cdot n) / 2^l < n + 1$ die Ungleichung $w \leq n < 2^l$ folgt.

Die oben beschriebenen Verfahren können in leicht abgewandelter Form auch für eine erweiterte Montgomery-Multiplikation mit einer Bitlänge verwendet werden, die nicht genau einer von der Prozessorhardware unterstützten Bitlänge entspricht. Um $(w, k)$ als Ergebnis von XMM$_l(a, b, n)$ zu berechnen, wird zunächst die nächstgrößere von der Prozessorhardware unterstützte Bitlänge $l + l'$ mit $l' > 0$ bestimmt. Die erweiterte Montgomery-Multiplikation XMM$_{l+l'}$ ($a \cdot 2^{l'}$, $b$, $n$) ergibt dann die Werte $(w, k \cdot 2^{l'})$ als Ergebnis.

### C. Montgomery-Multiplikation mit vergrößerter Bitlänge ($2^l$-adische Darstellung der Operanden)

Wie bereits in Abschnitt A erwähnt, ist die von einem Koprozessor ausgeführte Montgomery-Multiplikation meist auf eine vorgegebene Bitlänge $l$ für die Faktoren und den Modul beschränkt. Insbesondere für kryptographische Anwendungen kann aber eine Montgomery-Multiplikation mit größerer Bitlänge $L$ erforderlich sein. Gemäß den im vorliegenden und im nächsten Abschnitt beschriebenen Ausführungsbeispielen der Erfindung wird eine solche Montgomery-Multiplikation mit vergrößerter Bitlänge dadurch bereitgestellt, daß jeweils mehrere erweiterte Montgomery-Multiplikationen der Bitlänge $l$ ausgeführt und deren Ergebnisse geeignet miteinander verknüpft werden.

Die Ausführungsbeispiele des vorliegenden Abschnitts C beruhen auf der Grundidee, die Binärdarstellung der beiden Faktoren $a$ und $b$ mit Bitlänge $L$ jeweils in Abschnitten der Bitlänge $l$ zu verarbeiten. Mit anderen Worten wird eine $2^l$-adische Darstellung der Operanden, also der Faktoren $a$ und $b$ und des Moduls $n$, verwendet. Im Ergebnis setzt sich das Verfahren aus einer Multiplikation und einer modularen Reduktion zusammen, wobei diese Vorgänge geeignet ineinander verzahnt werden, um die Anzahl der XMM$_l$-Operationen und den für Zwischenergebnisse benötigten Speicherplatz zu minimieren.

Das im folgenden beschriebene Ausführungsbeispiel verdoppelt im Ergebnis die Bitlänge der von dem Koprozessor bereitgestellten Montgomery-Multiplikation; es gilt also $L = 2l$ mit $l \geq 2$. Die Faktoren $a$ und $b$ sowie der ungerade Modul $n$, die jeweils die Bitlänge $L = 2l$ aufweisen, werden durch je einen höherwertigen Abschnitt $a_1$, $b_1$, $n_1$ mit $l$ Bits und je einen geringerwertigen Abschnitt $a_0$, $b_0$, $n_0$ mit ebenfalls $l$ Bits dargestellt. Insgesamt gelten also die Beziehungen $a = a_1 \cdot 2^l + a_0$, $b = b_1 \cdot 2^l + b_0$, $n = n_1 \cdot 2^l + n_0$ und $0 \leq a_1, a_0, b_1, b_0, n_1, n_0 < 2^l$ sowie $n$ ungerade; letzteres ist gleichbedeutend mit $n_0$ ungerade.

Das Verfahren benötigt sieben XMM$_l$-Operationen und einige weitere Berechnungen. Die folgenden Schritte werden ausgeführt, wobei die Operanden der $XMM_l$-Operationen sämtlich nicht-negativ und kleiner als $2^l$ sind:

$$\text{SETZE}\quad (x_0, u_0) := XMM_l(a_0, b_0, n_0) \tag{C1.1}$$

$$\text{SETZE}\quad (c_1, c_0) := XMM_l(u_0, n_1, 1) \tag{C1.2}$$

$$\text{SETZE}\quad (d_1, d_0) := XMM_l(a_1, b_0, 1) \tag{C1.3}$$

$$\text{SETZE}\quad (e_1, e_0) := XMM_l(a_0, b_1, 1) \tag{C1.4}$$

$$\text{SETZE}\quad v_1 := c_1 + d_1 + e_1 \quad \text{UND} \quad v_0 := x_0 - c_0 - d_0 - e_0 \tag{C1.5}$$

$$\text{BERECHNE}\quad \bar{v_2}, \bar{v_1}, \bar{v_0}$$
$$\text{MIT}\quad \bar{v_2} \cdot 2^{2l} + \bar{v_1} \cdot 2^l + \bar{v_0} = v_1 \cdot 2^l + v_0$$
$$\text{WOBEI}\quad 0 \le \bar{v_1}, \bar{v_0} < 2^l \tag{C1.6}$$

$$\text{SETZE}\quad (x_1, u_1) := XMM_l(\bar{v_0}, 1, n_0) \tag{C1.7}$$

$$\text{SETZE}\quad (f_1, f_0) := XMM_l(u_1, n_1, 1) \tag{C1.8}$$

$$\text{SETZE}\quad (g_1, g_0) := XMM_l(a_1, b_1, 1) \tag{C1.9}$$

$$\text{SETZE}\quad w_1 := \bar{v_2} + f_1 + g_1 \quad \text{UND} \quad w_0 := \bar{v_1} + x_1 - f_0 - g_0 \tag{C1.10}$$

$$\text{SETZE}\quad w := w_1 \cdot 2^l + w_0 \tag{C1.11}$$

$$\text{GIB}\quad w \quad \text{ALS ERGEBNIS AUS} \tag{C1.12}$$

Für das Ergebnis $w$ gilt $w \equiv a \cdot b \cdot 2^{-2l} \pmod{n}$ mit $0 \le w < 2^{2l} + n - 1$.

Nach Schritt (C1.6) ist $(\bar{v_2}, \bar{v_1}, \bar{v_0})$ die $2^l$-adische Darstellung von $v_1 \cdot 2^l + v_0$. Es läßt sich zeigen, daß nach Schritt (C1.6) die folgende Beziehung gilt:

$$(\bar{v_2} \cdot 2^{2l} + \bar{v_1} \cdot 2^l + \bar{v_0}) \cdot 2^l = a \cdot b - a_1 \cdot b_1 \cdot 2^{2l} + u_0 \cdot n \tag{C2}$$

Die Werte $\bar{v_2}, \bar{v_1}, \bar{v_0}$ können mit einer einzigen Addition aus $v_1$ und $v_0$ berechnet werden, wenn die Zwischenwerte der Schritte (C1.1) - (C1.5) in binärer Zweierkomplementdarstellung vorliegen. Es gilt nämlich $0 \le \bar{v_2} < 3$ wegen Beziehung (C2) und wegen $0 \le u_0 < 2^l$.

Ebenso wie die Operanden $a$, $b$ und $n$ liegt auch Ergebnis der Montgomery-Multiplikation nach Schritt (C1.10) in Form eines höherwertigen Abschnitts $w_1$ und eines geringerwertigen Abschnitts $w_0$ vor.

Für den in Schritt (C1.12) ausgegebenen Gesamtwert $w$ läßt sich aus der Gleichung (C2) ableiten, daß die Ungleichung $0 \le w < 2^{2l} + n - 1$ gilt, und daß es eine ganze Zahl $u$ mit $0 \le u < 2^{2l}$ gibt, so daß $w \cdot 2^{2l} = a \cdot b + u \cdot n$ erfüllt ist. Mit anderen Worten gilt $w \equiv a \equiv b \cdot 2^{-2l} \pmod{n}$, so daß das Verfahren gemäß den Schritten (C1.1) - (C1.12) tatsächlich eine Montgomery-Multiplikation ausführt.

In einem konkreten Anwendungsbeispiel wird durch das Verfahren gemäß den Schritten (C1.1) - (C1.12) die von dem Koprozessor des Datenträgers vorgegebene Operandenlänge verdoppelt, um beispielsweise ein RSA-Verfahren - z.B. zur Ver- oder Entschlüsselung oder Verifikation oder Signaturerzeugung - mit einer Schlüssellänge von bis zu 2048 Bit unter Verwendung von 1024-Bit-Operationen des Koprozessors auszuführen.

Wenn statt einer Montgomery-Multiplikation eine Montgomery-Quadrierung ausgeführt werden soll, also die Faktoren $a$ und $b$ gleich sind, dann kann in einer Abwandlung des oben beschriebenen Verfahrens einer der Schritte (C1.3) und (C1.4) eingespart werden, weil dann $XMM_l(a_1, b_0, 1) = XMM_l(a_0, b_1, 1)$ gilt.

Im folgenden werden einige Prinzipien des oben beschriebenen Verfahrens in allgemeinerer Form dargestellt, um es dem Fachmann zu ermöglichen, das Verfahren an geänderte Anforderungen oder Bedingungen - z.B. eine größere gewünschte Bitlänge oder eine geringfügig anders definierte Berechnung der erweiterten Montgomery-Multiplikation - anzupassen. Die folgenden Anmerkungen betreffen wieder die Montgomery-Multiplikation zweier Faktoren $a$ und $b$ bezüglich eines Moduls $n$, wobei die Bitlänge von $a$, $b$ und $n$ jeweils durch $L$ beschränkt ist. Das Ergebnis $w$ soll modulo $n$ äquivalent zu $a \cdot b \cdot 2^{-L}$ sein.

Wie bereits erwähnt, liegt den Ausführungsbeispielen des vorliegenden Abschnitts C eine $2^l$-adische Darstellung der Faktoren $a$ und $b$ zugrunde. Mit anderen Worten werden die Faktoren $a$ und $b$ der Bitlänge $L$ jeweils in $m$ Abschnitte oder "Stellen" mit je $l$ Bits gegliedert. Diese Bitgruppen werden mit $a_i$ und $b_i$ bezeichnet. In Formelschreibweise ergeben sich also für $L = m \cdot l$ die Beziehungen $a = \sum_{i=0}^{m-1} a_i \cdot 2^{il}$ und $b = \sum_{i=0}^{m-1} b_i \cdot 2^{il}$, wobei $0 \le a_i, b_i < 2^l$ gilt. Ähnlich wie für die Faktoren $a$ und $b$ wird auch für den Modul $n$ die $2^l$-adische Darstellung $n = n_0 + \sum_{i=1}^{m-1} n_i \cdot 2^{il}$ mit $0 \le n_i < 2^l$ betrachtet. Hierdurch ist insbesondere $n_0$ auf den Wert $n_0 = n \bmod 2^l$ festgelegt.

Das Produkt $a \cdot b$ läßt sich somit in üblicher Weise schreiben als:

$$a \cdot b = \left( \sum_{i=0}^{m-1} a_i \cdot 2^{il} \right) \cdot \left( \sum_{i=0}^{m-1} b_i \cdot 2^{il} \right)$$

$$= \left( \sum_{i=0}^{2m-2} h_i \cdot 2^{il} \right) \text{ mit } h_i = \sum_{0 \le j, k < m \text{ und } j+k = i} a_j \cdot b_k \qquad \text{(C3)}$$

Während die "Stellen" $a_i$ und $b_i$ jeweils maximal $l$ Bits lang sind, können die Zwischenprodukte $a_j \cdot b_k$ maximal $2l$ Bit lang sein. Um die Berechnung durch einen Koprozessor mit einer Registerbreite von $l$ Bits zu ermöglichen, ist daher vorgesehen, diese Zwischenprodukte wiederum mittels $XMM_l$-Operationen in je zwei $l$ Bits lange Teilstücke zu zerlegen. Hierzu werden im hier beschriebenen Ausführungsbeispiel zwei Vorgehensweisen verwendet, nämlich erstens eine Zerlegung der Form $a_j \cdot b_k = p_{jk} \cdot 2^l + q_{jk}$ und zweitens eine Zerlegung der Form $a_j \cdot b_k = \bar{p}_{jk} \cdot 2^l - \bar{q}_{jk} \cdot n_0$, wobei $n_0$ der oben erwähnte Wert $n_0 = n \bmod 2^l$ ist und $0 \le p_{jk}, q_{jk}, \bar{q}_{jk} < 2^l$ sowie $0 \le \bar{p}_{jk} < 2^l + n_0 - 1$ gelten.

Die erstgenannte Zerlegung ergibt sich durch Anwendung von $XMM_l(a_j, b_k, 1)$; diese Zerlegung wird im hier beschriebenen Ausführungsbeispiel immer dann verwendet, wenn $j \ne 0$ oder $k \ne 0$ gilt. Die zweitgenannte Zerlegung ergibt sich durch Anwendung von $XMM_l(a_j, b_k, n_0)$; diese Zerlegung wird im vorliegenden Ausführungsbeispiel für $j = k = 0$ verwendet.

In dem Ausführungsbeispiel des Verfahrens gemäß den Schritten (C1.1) - (C1.12) gilt $m = 2$. Hier erfolgt die Berechnung der vier Zwischenprodukte gemäß der Gleichung (C3) mit den gerade genannten Zerlegungen in den Schritten (C1.1), (C1.3), (C1.4) und (C1.9). Für die in diesen Schritten berechneten Werte gilt insgesamt die Gleichung:

$$a \cdot b = g_1 \cdot 2^{3l} - g_0 \cdot 2^{2l} + (d_1 + e_1) \cdot 2^{2l} + (x_0 - d_0 - e_0) \cdot 2^l - u_0 \cdot n_0 \qquad \text{(C4)}$$

Das gemäß (C4) in Form von Koeffizienten der Bitlänge $l$ ausgedrückte Produkt $a \cdot b$ ist nun noch in modular reduzierter Form darzustellen. Die Grundidee für diese modulare Reduktion ist es, geeignete Vielfache des Moduls $n$ "von rechts" zu subtrahieren. Mit jedem Reduktionsschritt verkürzt sich die effektive Stellenanzahl des Produkts um eine Stelle. Hierunter ist zu verstehen, daß nach jedem Reduktionsschritt beide Seiten der sich jeweils ergebenden Gleichung mit $2^{-l}$ multipliziert werden können, so daß sich nach $m$ Schritten eine Gleichung der Form $a \cdot b \cdot 2^{-ml} = w$ ergibt, wobei $w$ die Bitlänge $m \cdot l$, also die "Stellenanzahl" $m$, aufweist.

Dieser Reduktionsvorgang wird nun am Beispiel $m = 2$ veranschaulicht. Hier umfaßt jeder Reduktionsschritt im vorliegenden Ausführungsbeispiel das Ersetzen eines Ausdrucks der Form $u_i \cdot n_0$ durch einen Ausdruck, der ein Vielfaches von $n$ enthält und dessen Koeffizienten durch eine Anwendung von $XMM_l(u_i, n_1, 1)$ berechenbar sind.

Im ersten Reduktionsschritt wird die gerade genannte Grundidee genutzt, indem die folgende Beziehung, die sich für $\text{XMM}_l(u_0, n_1, 1) = (c_1, c_0)$ aus Definition (B1) unter Verwendung der Gleichung $n = n_1 \cdot 2^l + n_0$ ergibt, verwendet wird:

$$u_0 \cdot n_0 \; = \; u_0 \cdot n - c_1 \cdot 2^{2l} + c_0 \cdot 2^l \tag{C5}$$

Die Bestimmung der Koeffizienten $c_1$ und $c_0$ erfolgt in Schritt (C1.2) des oben beschriebenen Verfahrens. Einsetzen von (C5) in die Gleichung (C4) ergibt:

$$a \cdot b \; = \; g_1 \cdot 2^{3l} - g_0 \cdot 2^{2l} + (c_1 + d_1 + e_1) \cdot 2^{2l}$$
$$+ (x_0 - c_0 - d_0 - e_0) \cdot 2^l - u_0 \cdot n \tag{C6}$$

Bei der hier erfolgenden Betrachtung modulo $n$ kann der Summand $u_0 \cdot n$ weggelassen werden. Ferner werden, wie in Schritt (C1.5) des Verfahrens, die Terme $c_1 + d_1 + e_1$ bzw. $x_0 - c_0 - d_0 - e_0$ durch $v_1$ bzw. $v_0$ ersetzt. Insgesamt ergibt sich:

$$a \cdot b \; \equiv \; g_1 \cdot 2^{3l} - g_0 \cdot 2^{2l} + v_1 \cdot 2^{2l} + v_0 \cdot 2^l \pmod{n} \tag{C7}$$

In Schritt (C1.6) des Verfahrens erfolgt nun noch eine Übertragsberechnung, um Koeffizienten $\bar{v}_2$, $\bar{v}_1$, $\bar{v}_0$ in dem für die $2^l$-adische Schreibweise "korrekten" Wertebereich zu ermitteln. Aus (C7) ergibt sich dadurch:

$$a \cdot b \; \equiv \; g_1 \cdot 2^{3l} - g_0 \cdot 2^{2l} + \bar{v}_2 \cdot 2^{3l} + \bar{v}_1 \cdot 2^{2l} + \bar{v}_0 \cdot 2^l \pmod{n} \tag{C8}$$

Um wieder ein Polynom zu erhalten, dessen geringstwertiger Koeffizient ein Vielfaches von $n_0$ aufweist, wird die folgende Beziehung angewendet, die für $\text{XMM}_l(\bar{v}_0, 1, n_0)$ aus der Definition (B1) abgeleitet ist:

$$\bar{v}_0 \; = \; x_1 \cdot 2^l - u_1 \cdot n_0 \tag{C9}$$

Die Werte von $x_1$ und $u_1$ werden in Schritt (C1.7) des Verfahrens berechnet. Insgesamt ergibt sich durch Einsetzen von (C9) in (C8) die Gleichung:

$$a \cdot b \; \equiv \; g_1 \cdot 2^{3l} - g_0 \cdot 2^{2l} +$$
$$\bar{v}_2 \cdot 2^{3l} + \bar{v}_1 \cdot 2^{2l} + x_1 \cdot 2^{2l} - u_1 \cdot n_0 \cdot 2^l \pmod{n} \tag{C10}$$

Der erste Reduktionsschritt ist damit beendet. Die effektive Stellenanzahl des Produkts wurde durch diesen Schritt um eine $2^l$-adische Stelle reduziert, wie aus der folgenden aus (C10) abgeleiteten Schreibweise deutlich wird:

$$a \cdot b \cdot 2^{-l} \;\equiv\; g_1 \cdot 2^{2l} - g_0 \cdot 2^l +$$

$$\bar{v_2} \cdot 2^{2l} + \bar{v_1} \cdot 2^l + x_1 \cdot 2^l - u_1 \cdot n_0 \pmod{n} \qquad \text{(C11)}$$

Insgesamt ist somit durch zwei $\mathrm{XMM}_l$-Operationen und einige zusätzliche Berechnungen der Grad des Polynoms in $2^l$ auf der rechten Seite der Gleichung (C11) gegenüber den Gleichungen (C6) - (C8) um 1 reduziert worden. Allgemein läßt sich im Fall $m > 2$ der Grad der entsprechenden Polynome durch $m$ $\mathrm{XMM}_l$-Operationen um 1 und durch $(m\text{-}1) \cdot m$ $\mathrm{XMM}_l$-Operationen um $m$-1 reduzieren. Es ergibt sich dadurch eine Äquivalenz der Form:

$$a \cdot b \cdot 2^{-(m-1)l} \;\equiv\; z_m \cdot 2^{ml} + z_{m-1} \cdot 2^{(m-1)l} + \ldots$$

$$\ldots + z_1 \cdot 2^l - z_0 \cdot n_0 \pmod{n} \qquad \text{(C12)}$$

Es ist nun noch ein abschließender Reduktionsschritt erforderlich, der analog zu den Schritten (C5) - (C7) ausgeführt wird. Um das Beispiel für den Spezialfall $m = 2$ fortzusetzen, soll der Term $u_1 \cdot n_0$ in Gleichung (C11) durch einen Ausdruck, der ein Vielfaches von $n$ aufweist, ersetzt werden. Dazu wird die folgende Beziehung, die sich für $\mathrm{XMM}_l$ ($u_1$, $n_1$, 1) aus Definition (B1) ergibt, verwendet:

$$u_1 \cdot n_0 \;=\; u_1 \cdot n - f_1 \cdot 2^{2l} + f_0 \cdot 2^l \qquad \text{(C13)}$$

Die Werte $f_1$ und $f_0$ werden in Schritt (C1.8) des Verfahrens berechnet. Aus (C11) und (C13) ergibt sich:

$$a \cdot b \cdot 2^{-l} \;\equiv\; (\bar{v_2} + f_1 + g_1) \cdot 2^{2l} +$$

$$(\bar{v_1} + x_1 - f_0 - g_0) \cdot 2^l - u_1 \cdot n \pmod{n} \qquad \text{(C14)}$$

Wegen der Rechnung modulo $n$ kann der Summand $u_1 \cdot n$ weggelassen werden. Mit der Benennung der Koeffizienten $\bar{v_2} + f_1 + g_1$ und $\bar{v_1} + x_1 - f_0 - g_0$ wie in Verfahrensschritt (C1.10) und einer Multiplikation der Gleichung mit $2^{-l}$ ergibt sich schließlich das gewünschte Ergebnis, nämlich:

$$a \cdot b \cdot 2^{-2l} \;\equiv\; w_1 \cdot 2^l + w_0 \pmod{n} \qquad \text{(C15)}$$

Damit ist der letzte Reduktionsschritt mit einer einzigen $\mathrm{XMM}_l$-Operation abgeschlossen. Allgemein werden für die bitabschnittsweisen Multiplikationen $m^2$ $\mathrm{XMM}_l$-Operationen benötigt, für die ersten $m$-1 Reduktionsschritte werden $(m\text{-}1) \cdot m$ $\mathrm{XMM}_l$-Operationen benötigt, und für den abschließenden Reduktionsschritt werden $m$-1 $\mathrm{XMM}_l$-Operationen benötigt. In der Summe ergeben sich somit $2m^2\text{-}1$ $\mathrm{XMM}_l$-Operationen für eine Montgomery-Multiplikation mit m-facher Bitlänge.

**D. Montgomery-Multiplikation mit vergrößerter Bitlänge (Darstellung der Operanden in Abhängigkeit von einer Modulwurzel)**

Der vorliegende Abschnitt D betrifft wie der vorhergehende Abschnitt C Verfahren zum Durchführen von Montgomery-Multiplikationen, deren Faktoren $a$, $b$ und Modul $n$ eine große Bitlänge $L$ aufweisen. Wieder wird die Berechnung auf mehrere erweiterte Montgomery-Multiplikationen mit geringerer Bitlänge $l$ abgestützt. Die vorliegend beschriebenen Verfahren beruhen jedoch auf einer Repräsentation der Operanden, die von der $2^l$-adischen Darstellung gemäß Abschnitt C abweicht.

Für die beiden Faktoren $a$ und $b$ wird eine Stellenwertdarstellung verwendet, bei der sich die Gewichte von Stelle zu Stelle um den Faktor $2^l/n_0$ unterscheiden, wobei $n_0$ eine ungerade, von einer angenäherten $m$-ten Wurzel des Moduls $n$ oder des negativen Moduls $-n$ abhängige Zahl ist. In Formelschreibweise gilt:

$$a \equiv \sum_{i=0}^{m-1} a_i \cdot 2^{(m-1-i)\cdot l} \cdot n_0{}^i \pmod{n} \text{ und}$$

$$b \equiv \sum_{i=0}^{m-1} b_i \cdot 2^{(m-1-i)\cdot l} \cdot n_0{}^i \pmod{n} \tag{D1}$$

Für den Spezialfall m = 2 vereinfachen sich die obigen Gleichungen (D1) zu $a \equiv a_0 \cdot 2^l + a_1 \cdot n_0$ (mod $n$) beziehungsweise $b \equiv b_0 \cdot 2^l + b_1 \cdot n_0$ (mod $n$).

Im folgenden wird auch die Schreibweise $\mu_{n_0,l}(x_0, x_1)$ für $x_0 \cdot 2^l + x_1 \cdot n_0$ verwendet. Für den Fall $m = 2$ werden die Faktoren $a$ und $b$ damit durch je ein Paar $(a_0, a_1)$, $(b_0, b_1)$ mit $\mu_{n_0,l}(a_0, a_1) \equiv a$ (mod $n$) und $\mu_{n_0,l}(b_0, b_1) \equiv b$ (mod $n$) repräsentiert. Den hier beschriebenen Verfahren liegt die Tatsache zugrunde, daß $(c_0, c_1) = \mathrm{XMM}_l(a, b, n_0)$ äquivalent zu $\mu_{n0,l}(c_0, -c_1) = a \cdot b$ ist.

Für den Modul $n$ wird im vorliegenden Abschnitt D die folgende Darstellung genutzt, die an die Darstellung des Moduls $n$ gemäß Abschnitt C angelehnt ist:

$$n = \pm n_0{}^m + \sum_{i=2}^{m} u_i \cdot n_0{}^{m-i} \cdot 2^{(i-1)\cdot l} \tag{D2}$$

Wieder unterscheiden sich die Stellengewichte für den Bereich $i = 2, ..., m$ jeweils um den Faktor $2^l/n_0$, und es ist $\pm n_0{}^m$ als zusätzlicher Summand vorgesehen. Das Vorzeichen von $n_0{}^m$ kann in einigen Ausgestaltungen positiv, in anderen dagegen negativ sein. In der folgenden Beschreibung wird ein negatives Vorzeichen gewählt, weil damit einige technische Probleme vermieden werden.

Im folgenden wird der Spezialfall $m = 2$ mit dem Summanden $-n_0{}^m$ betrachtet. Die Gleichung (D2) vereinfacht sich damit zu $n = -n_0{}^2 + u \cdot 2^l$ wobei der Koeffizient $u_2$ aus Gleichung (D2) hier der Einfachheit halber als $u$ geschrieben wird. Um zu einem gegebenen Modul $n$ die Werte $n_0$ und $u$ zu ermitteln, wird $n_0$ als Quadratwurzel von $-n$ modulo $2^l$ für ein $l$ berechnet, das ungefähr die halbe Bitlänge von $n$ aufweist. Eine solche Quadratwurzel existiert nur für $n \equiv -1$ (mod 8). Falls diese Bedingung nicht erfüllt ist, wird $n$ durch $3n$ oder $5n$ oder $7n$ ersetzt.

Im vorliegenden Ausführungsbeispiel wird aus technischen Gründen eine Wurzel - hier für $m = 2$ die Quadratwurzel - des negativen Moduls $-n$ verwendet, während in Ausführungsalternativen - bei geeigneter Anpassung des restlichen Verfahrens - auch eine Wurzel des Moduls $n$ zur Berechnung von $n_0$ herangezogen werden kann.

Liegt der Modul $n$ mit $n \equiv -1$ (mod 8) vor, wird die Bitlänge $l$ durch die folgende Beziehung festgelegt:

$$4^{l-1} \leq \frac{16}{15} \cdot n < 4^l \tag{D3}$$

Im folgenden wird $l \geq 3$ vorausgesetzt. Es wird nun eine natürliche Zahl $n_0$ berechnet, die die folgenden Bedingungen erfüllt:

$$n_0{}^2 \equiv -n \pmod{2^l} \quad \text{und} \quad 0 < n_0 < 2^{l-2} \tag{D4}$$

Zur Berechnung eines geeigneten $n_0$ wird im vorliegenden Ausführungsbeispiel das folgende Verfahren verwendet, das für ein $l$ mit $l \geq 3$ und eine ganze Zahl $A$ mit $A \equiv 1$ (mod 8) eine hinreichend kleine Quadratwurzel von $A$ und das Inverse $Y$ von $X$ bestimmt:

$$\text{SETZE } \lambda := 3 \text{ UND } X := 1 \text{ UND } Y := 1 \qquad \text{(D5.1)}$$

$$\text{SOLANGE } \lambda < l \text{ BEGINNE} \qquad \text{(D5.2)}$$

$$\text{SETZE } \lambda := \min\{2\lambda - 2, l\} \qquad \text{(D5.3)}$$

$$\text{SETZE } X := X + Y \cdot \frac{A - X^2}{2} \bmod 2^\lambda \qquad \text{(D5.4)}$$

$$\text{SETZE } Y := 2Y - XY^2 \bmod 2^\lambda \qquad \text{(D5.5)}$$

$$\text{ENDE\_SOLANGE}$$

$$\text{WENN } X > 2^{l-1} \text{ DANN} \qquad \text{(D5.6)}$$

$$\text{SETZE } X := X - 2^{l-1} \text{ UND } Y := Y - 2^{l-1} \bmod 2^\lambda \quad \text{(D5.7)}$$

$$\text{WENN } X > 2^{l-2} \text{ DANN} \qquad \text{(D5.8)}$$

$$\text{SETZE } X := 2^{l-1} - X \text{ UND } Y := 2^{l-1} - Y \bmod 2^\lambda \quad \text{(D5.9)}$$

$$\text{GIB } X, Y \text{ ALS ERGEBNIS AUS} \qquad \text{(D5.10)}$$

Für die Ergebniswerte $X$ und $Y$ gelten nach der Ausführung dieses Verfahrens die folgenden Beziehungen:

$$X^2 \equiv A \,(\bmod\, 2^l) \quad \text{und} \quad X \cdot Y \equiv 1 \,(\bmod\, 2^l) \quad \text{und} \quad 0 < X < 2^{l-2} \qquad \text{(D6)}$$

Die Gültigkeit der Beziehungen (D6) ergibt sich aus der Beobachtung, daß nach jedem Schleifendurchlauf in den Schritten (D5.2) - (D5.5) die Beziehungen $X^2 \equiv A \,(\bmod\, 2^\lambda)$ und $X \cdot Y \equiv 1 \,(\bmod\, 2^\lambda)$ gelten. Nach Beendigung der Schleife gelten somit $X^2 \equiv A \,(\bmod\, 2^l)$ und $X \cdot Y \equiv 1 \,(\bmod\, 2^l)$, und diese Äquivalenzen werden durch die Schritte (D5.6) - (D5.9) nicht beeinflußt.

Insgesamt läßt sich somit durch die Schritte (D5.1) - (D5.10) die für die Aufteilung des Moduls $n$ benötigte 2-adische Quadratwurzel $n_0$ berechnen, indem $l$ gemäß der Ungleichung (D3) bestimmt wird und $A$ auf $-n$ gesetzt wird. Der Ergebniswert $X$ ist die gewünschte Quadratwurzel $n_0$. Der für die Aufteilung des Moduls $n$ ebenfalls benötigte Parameter $u$ ergibt sich aus der Gleichung $u = (n_0{}^2 + n) \cdot 2^{-l}$. Für die so berechneten Werte $n_0$ und $u$ gilt dann:

$$n = u \cdot 2^l - n_0{}^2 \quad \text{und} \quad u \in \mathbb{N} \quad \text{und} \quad u < 2^l \quad \text{und} \quad u - n_0 \geq \frac{3}{64} \cdot 2^l \qquad \text{(D7)}$$

Das Verfahren gemäß den Schritten (D5.1) - (D5.10) läßt sich als 2-adische Newton-Iteration charakterisieren. Hierbei ist unter "2-adisch" grob gesagt zu verstehen, daß die Bits von "rechts nach links" abgearbeitet werden, statt wie bei der normalen Newton-Iteration die Genauigkeit schrittweise durch Abarbeiten der Ziffern von "links nach rechts" zu erhöhen. In diesem Zusammenhang ist das aus der Zahlentheorie an sich bekannte Hensel'sche Lemma einschlägig.

Für den Fall $m > 2$ ist $n_0$ als eine $m$-te Wurzel von $n$ modulo $2^l$ oder als eine $m$-te Wurzel von $-n$ modulo $2^l$ zu berechnen.

Wie bereits erwähnt, werden im vorliegenden Ausführungsbeispiel für $m = 2$ auch die Faktoren $a$ und $b$ in je ein Wertepaar $(a_0, a_1)$, $(b_0, b_1)$ mit $\mu n_0, l(a_0, a_1) \equiv a \,(\bmod\, n)$ und $\mu n_0, l(b_0, b_1) \equiv b \,(\bmod\, n)$ aufgeteilt. Die Berechnung von $a_0, a_1$ erfolgt durch Anwendung der folgenden Beziehungen:

$$a_1 = a \cdot n_0^{-1} \bmod 2^l \quad \text{und} \quad a_0 = (a - a_1 \cdot n_0) \cdot 2^{-l} \qquad \text{(D8)}$$

Der Wert $n_0^{-1} \bmod 2^l$ ist bei der Aufteilung von $n$ in den Schritten (D5.1) - (D5.10) als "Nebenprodukt", nämlich als Ergebniswert $Y$, berechnet worden. Die Koeffizienten $b_0$ und $b_1$ werden entsprechend berechnet.

Die gemäß (D8) berechneten Koeffizienten $a_1$ und $b_1$ können möglicherweise negativ sein. Die mit diesen Koeffizienten noch auszuführenden XMM$_r$-Operationen sind jedoch nur für positive Argumente definiert, so daß eine mit der $\mu$-Darstellung verträgliche Reduktion der Koeffizienten auf den zulässigen Wertebereich 0, ..., $2^l$-1 erforderlich ist.

Das im folgenden beschriebene Verfahren ist für alle Bitlängen $l$ und Werte $u$, $n^0 \in \mathbb{N}$ anwendbar, die die Bedingungen $n_0 < 2^{l-2}$, $u < 2^l$ und $u - n_0 \geq \dfrac{3}{64} \cdot 2^l$ erfüllen. Das Verfahren dient allgemein zur Reduktion eines Wertepaares $(x_0, x_1) \in \mathbb{Z}^2$ zu einem Paar von Ergebniswerten $(\bar{x_0}, \bar{x_1}) \in \mathbb{Z}^2$ derart, daß $0 \leq \bar{x_0}, \bar{x_1} < 2^l$ und $\mu_{n_0,l}(x_0, x_1) \equiv \mu_{n_0,l}(\bar{x_0}, \bar{x_1}) \pmod{u \cdot 2^l - n_0^2}$ gelten. Es werden die folgenden Verfahrensschritte ausgeführt:

$$\text{SOLANGE } \min\{x_0, x_1\} < 0 \quad \text{BEGINNE} \qquad \text{(D9.1)}$$

$$\text{WENN } \quad x_0 \geq x_1 \qquad \text{(D9.2)}$$

$$\text{DANN SETZE } (x_0, x_1) := (x_0 - n_0, x_1 + 2^l) \qquad \text{(D9.3)}$$

$$\text{SONST SETZE } (x_0, x_1) := (x_0 + u, x_1 - n_0) \qquad \text{(D9.4)}$$

$$\text{ENDE\_SOLANGE}$$

$$\text{SOLANGE } \max\{x_0, x_1\} \geq 2^l \quad \text{BEGINNE} \qquad \text{(D9.5)}$$

$$\text{WENN } \quad x_0 \leq x_1 \qquad \text{(D9.6)}$$

$$\text{DANN SETZE } (x_0, x_1) := (x_0 + n_0, x_1 - 2^l) \qquad \text{(D9.7)}$$

$$\text{SONST SETZE } (x_0, x_1) := (x_0 - u, x_1 + n_0) \qquad \text{(D9.8)}$$

$$\text{ENDE\_SOLANGE}$$

$$\text{GIB } (x_0, x_1) \text{ ALS ERGEBNIS } (\bar{x_0}, \bar{x_1}) \text{ AUS} \qquad \text{(D9.9)}$$

Die Korrektheit des Verfahrens ergibt sich aus der Tatsache, daß keine der Zuweisungen in den Schritten (D9.3), (D9.4), (D9.7) und (D9.8) den Wert $\mu_{n_0,l}(x_0, x_1)$ modulo $u \cdot 2^l - n_0^2$ verändert. Das Verfahren terminiert, weil bei jedem Durchlauf der ersten Schleife der kleinere der Werte $x_0$, $x_1$ um minde-stens $\dfrac{3}{64} \cdot 2^l$ zunimmt, und weil bei jedem Durchlauf der zweiten Schleife der größere der Werte $x_0$, $x_1$ um mindestens $\dfrac{3}{64} \cdot 2^l$ abnimmt.

Das Verfahren gemäß den Schritten (D9.1) - (D9.9) wird sowohl auf die Koeffizienten $(a_0, a_1)$ als auch auf die Koeffizienten $(b_0, b_1)$ angewendet, wobei $l$, $u$ und $n_0$ gemäß (D3) und (D7) verwendet werden. Mit diesen Parameterwerten sind die für das Verfahren vorausgesetzten Vorbedingungen erfüllt. Nach der Reduktion gelten die Beziehungen $\mu_{n_0,l}(a_0, a_1) \equiv \mu_{n_0,l}(\bar{a_0}, \bar{a_1}) \pmod{n}$ und $\mu_{n_0,l}(a_0, a_1) \equiv \mu_{n_0,l}(\bar{b_0}, \bar{b_1}) \pmod{n}$. Der Einfachheit halber

werden die Ergebniswerte $(\bar{a_0}, \bar{a_1})$ und $(\bar{b_0}, \bar{b_1})$ im folgenden wieder mit $(a_0, a_1)$ bzw. $(b_0, b_1)$ bezeichnet.

Das folgende Verfahren führt eine Montgomery-Multiplikation für Faktoren $a$, $b$ der Bitlänge $L$ und einen vorgegebenen Modul $n$ der Bitlänge $L$ aus. Das Verfahren setzt vorberechnete Werte $l$, $u$, $n_0 \in \mathbb{N}$ und $a_0, a_1, b_0, b_1 \in \mathbb{Z}$ voraus, die die folgenden Eigenschaften aufweisen:

$$n = u \cdot 2^l - n_0^2 \quad \text{und} \quad 0 < n_0 < 2^{l-2} \qquad (D10.1)$$

$$\mu_{n_0,l}(a_0, a_1) \equiv a \ (\mathrm{mod}\ n) \quad \text{und} \quad 0 \le a_0, a_1 < 2^l \qquad (D10.2)$$

$$\mu_{n_0,l}(b_0, b_1) \equiv b \ (\mathrm{mod}\ n) \quad \text{und} \quad 0 \le b_0, b_1 < 2^l \qquad (D10.3)$$

Im vorliegenden Ausführungsbeispiel werden diese Werte durch die bereits beschriebenen Schritte berechnet, und zwar wird die Bitlänge $l$ gemäß Beziehung (D3) festgelegt, $n_0$ wird durch die Schritte (D5.1) - (D5.10) berechnet, $u$ wird durch Beziehung (D7) bestimmt, und $a_0$, $a_1$ bzw. $b_0$, $b_1$ werden gemäß Beziehung (D8) sowie durch je einen Reduktionsvorgang mit den Schritten (D9.1) - (D9.9) berechnet.

Das Multiplikationsverfahren berechnet Ergebniswerte $(c_0, c_1) \in \mathbb{Z}^2$ mit $0 \le c_0, c_1 < 2^l$, so daß $\mu_{n_0,l}(c_0, c_1) \equiv a \cdot b \cdot 2^{-2l} \ (\mathrm{mod}\ n)$ gilt. Es werden die folgenden Schritte ausgeführt:

$$\text{SETZE} \quad (d_0, d_1) := \mathrm{XMM}_l(a_0, b_0, n_0) \qquad (D11.1)$$

$$\text{SETZE} \quad (e_0, e_1) := \mathrm{XMM}_l(a_1, b_0, n_0) + \mathrm{XMM}_l(a_0, b_1, n_0) \qquad (D11.2)$$

$$\text{SETZE} \quad (f_0, f_1) := \mathrm{XMM}_l(a_1, b_1, n_0) \qquad (D11.3)$$

$$\text{SETZE} \quad h_0 := d_0 \ \text{UND} \ h_1 := e_0 - d_1 \ \text{UND}$$
$$h_2 := f_0 - e_1 \ \text{UND} \ h_3 := -f_1 \qquad (D11.4)$$

$$\text{SETZE} \quad (h_2, h_3) := Reduce(h_2, h_3) \qquad (D11.5)$$

$$\text{SETZE} \quad (k_1, k_2) := \mathrm{XMM}_l(h_3, u, n_0) \qquad (D11.6)$$

$$\text{SETZE} \quad (q_1, q_2) := Reduce(h_1 + k_1, h_2 - k_2) \qquad (D11.7)$$

$$\text{SETZE} \quad (m_0, m_1) := \mathrm{XMM}_l(q_2, u, n_0) \qquad (D11.8)$$

$$\text{SETZE} \quad (c_0, c_1) := Reduce(h_0 + m_0, q_1 - m_1) \qquad (D11.9)$$

$$\text{GIB} \quad (c_0, c_1) \ \text{ALS ERGEBNIS AUS} \qquad (D11.10)$$

Die Addition von Tupeln in Schritt (D11.2) wird komponentenweise ausgeführt. Die in den Schritten (D11.5), (D11.7) und (D11.9) genannte Operation $Reduce$ ist die mit der $\mu$-Darstellung verträgliche Reduktion modulo $n$, die z.B. durch das Verfahren gemäß den Schritten (D9.1) - (D9.9) erfolgen kann.

Auch das Verfahren gemäß den Schritten (D11.1) - (D11.10) weist einen Multiplikationsteil und einen Reduktionsteil auf. Die Multiplikation findet in den Schritten (D11.1) - (D11.3) statt. Ähnlich wie bei dem in Abschnitt C beschriebenen Verfahren werden die Zwischenprodukte durch Anwendung von $\mathrm{XMM}_l(a_j, b_k, n_0)$ in je zwei $l$ Bits lange Teilkoeffizienten zerlegt. Im allgemeinen Fall $m \geq 2$ hat diese Zerlegung die folgende Form, wobei negative Werte für $\bar{\bar{q_{jk}}}$ auftreten:

$$a_j \cdot b_k = \bar{p_{jk}} \cdot 2^l + \bar{\bar{q_{jk}}} \cdot n_0 \qquad (D12)$$

Im Gegensatz zu dem Verfahren gemäß Abschnitt C ist bei dem vorliegenden Verfahren keine Fallunterscheidung hinsichtlich des verwendeten Zerlegungsverfahrens erforderlich, sondern es wird stets die Aufspaltung gemäß (D12) verwendet. Diese gesteigerte Homogenität hat den Vorteil, daß in Ausführungsalternativen effizientere Multiplikationstechniken verwendet werden können. Beispielsweise werden in einer unten noch genauer zu beschreibenden Variante XMM$_l$-Operationen eingespart, indem eine unter dem Namen Karatsuba-Multiplikation an sich bekannte Technik angewendet wird.

Allgemein läßt sich der Multiplikationsteil des Verfahrens in der folgenden, an (C3) angelehnten Darstellung ausdrücken, wobei $\bar{p_{jk}}$ und $\bar{q_{jk}}$ das Ergebnis der Zerlegung von $a_j \cdot b_k$ gemäß (D12) angeben:

$$a \cdot b \equiv \sum_{i=0}^{2m-1} h_i \cdot 2^{(2m-1-i) \cdot l} \cdot n_0^{\,i} \pmod{n}$$

$$\text{mit } h_i = \left( \sum_{j,\,k \text{ mit } j+k=i} \bar{p_{jk}} \right) + \left( \sum_{j,\,k \text{ mit } j+k=i-1} \bar{\bar{q_{jk}}} \right) \qquad (D13)$$

Im folgenden soll wieder der Spezialfall $m = 2$ gemäß dem Verfahren (D11.1) - (D11.10) behandelt werden. Nach Schritt (D11.4) ist die durch Gleichung (D13) angegebene Belegung der Koeffizienten $h_i$ erreicht, die ausgeschrieben durch die folgende Formel ausgedrückt wird:

$$a \cdot b \equiv h_3 \cdot n_0^3 + h_2 \cdot 2^l \cdot n_0^2 + h_1 \cdot 2^{2l} \cdot n_0 + h_0 \cdot 2^{3l} \pmod{n} \qquad (D14)$$

Die Anwendung der Funktion Reduce auf ein Paar $(h_i, h_{i+1})$ verändert dessen Summe modulo $n$ nicht.
Es wird nun der führende Term von (D14) eliminiert. Hierzu wird die Beziehung $h_3 \cdot n_0^2 \equiv k_1 \cdot 2^{2l} - k_2 \cdot n_0 \cdot 2^l$ $\pmod{n}$ verwendet, die sich aus (D7), einer Reduktion modulo $n$ sowie (B1) für XMM $l(h_3, u, n_0)$ ergibt. Nach dem Reduktionsschritt (D11.7) gilt dann:

$$a \cdot b \equiv q_2 \cdot 2^l \cdot n_0^2 + q_1 \cdot 2^{2l} \cdot n_0 + h_0 \cdot 2^{3l} \pmod{n} \qquad (D15)$$

Auf ähnliche Weise wird in einem weiteren Reduktionsschritt der führende Term von (D15) eliminiert, indem die Beziehung $q_2 \cdot n_0^2 \equiv m_0 \cdot 2^{2l} - m_1 \cdot n_0 \cdot 2^l \pmod{n}$ angewendet wird. Zur Bestimmung der Koeffizienten $m_0$ und $m_1$ wird in Schritt (D11.8) die Operation $XMM_l(q_2, u, n_0)$ ausgeführt. Nach der Reduktion in Schritt (D11.9) ergibt sich dann:

$$a \cdot b \equiv c_1 \cdot 2^{2l} \cdot n_0 + c_0 \cdot 2^{3l} \equiv 2^{2l} \cdot \mu_{n_0, l}(c_0, c_1) \pmod{n} \qquad (D16)$$

Das Verfahren gemäß den Schritten (D11.1) - (D11.10) benötigt für den Multiplikationsteil vier und für den Reduktionsteil zwei XMM;-Operationen. Wie bereits erwähnt, läßt sich die Anzahl der XMM$_l$-Operationen für den Multiplikationsteil auf drei verringern, indem statt der "schulmäßigen" Multiplikation gemäß (D13) eine Karatsuba-Multiplikation ausgeführt wird, die z.B. aus dem Artikel "Multiplication of multidigit numbers on automata" von A. Karatsuba und Yu. Ofman, Soviet Physics - Dokladay, 7,1963, Seiten 595 - 596, an sich bekannt ist.
In einer Ausgestaltung, die die Karatsuba-Multiplikation verwendet, wird Schritt (D11.3) des oben beschriebenen Verfahrens vorgezogen, und Schritt (D11.2) wird durch die folgende Berechnung und Zuweisung ersetzt:

$$\text{SETZE} \quad (e_0, e_1) := \text{XMM}_l(a_0 - a_1, b_1 - b_0, n_0) + (d_0, d_1) + (f_0, f_1) \qquad (D17)$$

Hierbei gilt die Definition $\text{XMM}_l(-x, y, n_0) = \text{XMM}_l(x, -y, n_0) = -\text{XMM}_l(x(, y, n_0)$ für positive Zahlen $x$ und $y$. In dieser Ausgestaltung wird somit eine $\text{XMM}_l$-Operation gespart, so daß sich eine Montgomery-Multiplikation mit verdoppelter Bitlänge auf fünf erweiterte Montgomery-Multiplikationen mit einfacher Bitlänge abstützen läßt. Allgemein beträgt für $m = 2^\alpha$ der Rechenaufwand für den durch das Karatsuba-Verfahren ausgeführten Multiplikationsteil $3^\alpha$ statt sonst $4^\alpha$ $\text{XMM}_l$-Operationen.

Schon das Verfahren gemäß den Schritten (D11.1) - (D11.10) spart gegenüber den in Abschnitt C beschriebenen Verfahren $\text{XMM}_l$-Operationen ein, und diese Einsparung läßt sich durch die gerade beschriebene Ausführungsalternative weiter steigern. Die geringere Anzahl von $\text{XMM}_l$-Operationen wird jedoch durch zusätzliche Nebenrechnungen erkauft, insbesondere durch die Berechnungen, die erforderlich sind, um aus der üblichen Binärdarstellung von $a$ und $b$ die Darstellung mit Koeffizienten $a_0$, $a_1$, $b_0$, $b_1$ gemäß (D8) zu berechnen. Je nach der Prozessorumgebung, in der die Montgomery-Multiplikation mit erweiterter Bitlänge ausgeführt werden soll, kann es daher geraten sein, entweder ein Verfahren gemäß Abschnitt C oder eines der im vorliegenden Abschnitt D beschriebenen Verfahren einzusetzen.

Es versteht sich, daß die in der obigen Beschreibung von Ausführungsbeispielen enthaltenen Einzelheiten nicht als Einschränkungen des Schutzbereichs der Erfindung aufgefaßt werden sollen. Viele Abwandlungen und weitere Ausführungsalternativen sind möglich und für den Fachmann offensichtlich. So können z.B. die oben aufgeführten Rechenschritte umgeordnet werden oder ganz oder teilweise parallel oder ganz oder teilweise ineinander verzahnt (*interleaved*) ausgeführt werden. Der Schutzbereich der Erfindung soll daher nicht durch die obigen Ausführungsbeispiele, sondern durch die folgenden Ansprüche bestimmt werden.

**Patentansprüche**

1. Verfahren zum Ausführen einer Montgomery-Multiplikation zweier Faktoren $a$, $b$ bezüglich eines Moduls $n$ unter Verwendung eines Koprozessors, der Montgomery-Multiplikationen mit einer vorgegebenen maximalen Bitlänge $l$ unterstützt, wobei die Faktoren $a$, $b$ und der Modul $n$ eine vorgegebene Bitlänge $L$ aufweisen, **dadurch gekennzeichnet, daß**

   - die Berechnung der Montgomery-Multiplikation mit der Bitlänge $L$ auf mehrere erweiterte Montgomery-Multiplikationen mit der gegenüber der Bitlänge $L$ geringeren Bitlänge $l$ abgestützt wird, wobei bei einer solchen erweiterten Montgomery-Multiplikation zweier Faktoren $a'$, $b'$ bezüglich eines Moduls $n'$ zwei Ergebniswerte $w$ und $k$ der Bitlänge $l$ derart ermittelt werden, daß $\omega \cdot 2^i = a' \cdot b' + k \cdot n'$ gilt,
   - die Faktoren $a$, $b$ der Montgomery-Multiplikation in Form von Koeffizienten $a_j$, $b_k$, die jeweils die Bitlänge $l$ aufweisen, ausgewertet werden, und
   - zumindest manche Paare der Koeffizienten $a_j$, $b_k$ als Faktoren je einer erweiterten Montgomery-Multiplikation verwendet werden.

2. Verfahren nach Anspruch 1, **dadurch gekennzeichnet, daß** die Multiplikation der Faktoren $a$, $b$ eine Karatsuba-Multiplikation ist.

3. Verfahren nach Anspruch 1, **dadurch gekennzeichnet, daß** eine Reduktion bezüglich des Moduls $n$ in mehreren Schritten erreicht wird, wobei jeder Reduktionsschritt mindestens eine erweiterte Montgomery-Multiplikation umfaßt.

4. Verfahren nach einem der Ansprüche 1 bis 3, **dadurch gekennzeichnet, daß** die Faktoren $a$, $b$ und/oder der Modul $n$ in einer $2^l$-adischen Darstellung ausgewertet werden.

5. Verfahren nach Anspruch 4, **dadurch gekennzeichnet, daß** ein Wert $n_0$ als geringstwertige $2^l$-adische Stelle des Moduls $n$ ermittelt wird.

6. Verfahren nach einem der Ansprüche 1 bis 4, **dadurch gekennzeichnet, daß** ein Wert $n_0$ als eine Wurzel des Moduls $n$ modulo $2^l$ oder als eine Wurzel des Wertes $-n$ modulo $2^l$ ermittelt wird.

**7.** Verfahren nach Anspruch 6, **dadurch gekennzeichnet, daß** der Modul $n$ gemäß der Beziehung

$$n \;=\; \pm n_0{}^m + \sum_{i=2}^{m} u_i \cdot n_0{}^{m-i} \cdot 2^{(i-1)\cdot l}$$

aufgespalten wird.

**8.** Verfahren nach Anspruch 6 oder Anspruch 7, **dadurch gekennzeichnet, daß** die Faktoren $a$ und $b$ gemäß den Beziehungen

$$a \;\equiv\; \sum_{i=0}^{m-1} a_i \cdot 2^{(m-1-i)\cdot l} \cdot n_0{}^{i} \pmod{n}$$

und

$$b \;\equiv\; \sum_{i=0}^{m-1} b_i \cdot 2^{(m-1-i)\cdot l} \cdot n_0{}^{i} \pmod{n}$$

aufgespalten werden.

**9.** Verfahren nach einem der Ansprüche 5 bis 8, **dadurch gekennzeichnet, daß** die erweiterte Montgomery-Multiplikation der Koeffizienten $a_j$, $b_k$ bezüglich des Moduls $n_0$ oder bezüglich des Moduls 1 durchgeführt wird.

**10.** Verfahren nach Anspruch 3 und einem der Ansprüche 5 bis 8, **dadurch gekennzeichnet, daß** mindestens eine erweiterte Montgomery-Multiplikation jedes Reduktionsschritts bezüglich des Moduls $n_0$ oder bezüglich des Moduls 1 durchgeführt wird.

**11.** Verfahren nach einem der Ansprüche 1 bis 10, **dadurch gekennzeichnet, daß** die Bitlänge $L$ doppelt so groß wie die Bitlänge $l$ ist.

**12.** Verfahren nach einem der Ansprüche 1 bis 11, **dadurch gekennzeichnet, daß** das Verfahren dazu vorgesehen ist, in Zusammenhang mit einem RSA-Verschlüsselungsverfahren oder einem RSA-Entschlüsselungsverfahren oder einem RSA-Verifikationsverfahren oder einem RSA-Signaturverfahren eingesetzt zu werden.

**13.** Verfahren nach einem der Ansprüche 1 bis 12, **dadurch gekennzeichnet, daß** das Verfahren als Teilschritt in einer modularen Exponentiation ausgeführt wird.

**14.** Verfahren nach einem der Ansprüche 1 bis 13, **dadurch gekennzeichnet, dass** bei jeder der genannten erweiterten Montgomery-Multiplikationen zweier Faktoren $a'$, $b'$ bezüglich des Moduls $n'$, wobei die Faktoren $a'$, $b'$ und der Modul $n'$ die Bitlänge $l$ aufweisen, eine erste und eine zweite Montgomery-Multiplikation der Bitlänge $l$ ausgeführt werden, wobei bei der ersten und der zweiten Montgomery-Multiplikation jeweils die Faktoren $a'$ und $b'$, aber unterschiedliche Module, verwendet werden.

**15.** Verfahren nach Anspruch 14, **dadurch gekennzeichnet, daß** bei der ersten Montgomery-Multiplikation der Wert $n$ und bei der zweiten Montgomery-Multiplikation der Wert $2^l - n$ als Modul verwendet wird.

**16.** Verfahren nach Anspruch 14 oder 15, **dadurch gekennzeichnet, daß** eine Fallunterscheidung durchgeführt wird, um die Ergebnisse der erweiterten Montgomery-Multiplikation aus den Ergebnissen der ersten und/ oder der zweiten Montgomery-Multiplikation zu berechnen.

**17.** Verfahren nach Anspruch 16, **dadurch gekennzeichnet, daß** in die Fallunterscheidung zumindest Informationen über die geringstwertigen Bits der Ergebnisse der beiden Montgomery-Multiplikation sowie des Produkts $a \cdot b$

eingehen.

**18.** Computerprogrammprodukt, das Programmbefehle aufweist, die dazu eingerichtet sind, mindestens einen Prozessor zu veranlassen, ein Verfahren mit den Merkmalen eines der Ansprüche 1 bis 17 auszuführen.

**19.** Tragbarer Datenträger, insbesondere Chipkarte oder Chipmodul, der zur Ausführung eines Verfahrens mit den Merkmalen eines der Ansprüche 1 bis 17 eingerichtet ist.

**20.** Tragbarer Datenträger nach Anspruch 19, **dadurch gekennzeichnet, daß** der Datenträger einen Koprozessor aufweist, der Montgomery-Multiplikationen der Bitlänge $l$ unterstützt.

**Claims**

**1.** Method for performing a Montgomery multiplication of two factors $a$, $b$ with respect to a modulus $n$ using a coprocessor supporting Montgomery multiplications with a predetermined maximum bit length $l$, wherein the factors $a$, $b$ and the modulus $n$ have a predetermined bit length $L$, **characterised in that**

- the calculation of the Montgomery multiplication with the bit length $L$ is based on several extended Montgomery multiplications with the bit length $l$, which is smaller than the bit length $L$, wherein, in such an extended Montgomery multiplication of two factors $a'$, $b'$ with respect to a modulus $n'$, two resulting values $w$ and $k$ with the bit length $l$ are determined such that $\omega \cdot 2^l = a' \cdot b' + k \cdot n'$ applies,
- the factors $a$, $b$ of the Montgomery multiplication are evaluated in the form of coefficients $a_j$, $b_k$, each of which have the bit length $l$, and
- at least some pairs of the coefficients $a_j$, $b_k$ are used as factors of an extended Montgomery multiplication, respectively.

**2.** Method according to claim 1, **characterised in that** the multiplication of the factors $a$, $b$ is a Karatsuba multiplication.

**3.** Method according to claim 1, **characterised in that** a reduction with respect to the modulus $n$ is accomplished in several steps, wherein each reduction step comprises at least one extended Montgomery multiplication.

**4.** Method according to any one of the claims 1 to 3, **characterised in that** the factors $a$, $b$ and/ or the modulus $n$ are evaluated in a $2^l$-adic representation.

**5.** Method according to claim 4, **characterised in that** a value $n_0$ is determined as the least significant $2^l$-adic digit of the modulus $n$.

**6.** Method according to any one of the claims 1 to 4, **characterised in that** a value $n_0$ is determined as a root of the modulus $n$ modulo $2^l$, or as a root of the value $-n$ modulo $2^l$.

**7.** Method according to claim 6, **characterised in that** the modulus $n$ is split according to the relation

$$n \;=\; \pm n_0{}^m + \sum_{i=2}^{m} u_i \cdot n_0{}^{m-i} \cdot 2^{(i-1)\cdot l} \;.$$

**8.** Method according to claim 6 or claim 7, **characterised in that** the factors $a$ and $b$ are split according to the relations

$$a \;\equiv\; \sum_{i=0}^{m-1} a_i \cdot 2^{(m-1-i)\cdot l} \cdot n_0{}^i \pmod{n}$$

and

$$b \equiv \sum_{i=0}^{m-1} b_i \cdot 2^{(m-1-i) \cdot l} \cdot n_0{}^i \pmod{n} \ .$$

**9.** Method according to any one of the claims 5 to 8, **characterised in that** the extended Montgomery multiplication of the coefficients $a_j$, $b_k$ is performed with respect to the modulus $n_0$ or with respect to the modulus 1.

**10.** Method according to claim 3 and to any one of the claims 5 to 8, **characterised in that** at least one extended Montgomery multiplication of each reduction step is performed with respect to the modulus $n_0$ or with respect to the modulus 1.

**11.** Method according to any one of the claims 1 to 10, **characterised in that** the bit length $L$ is twice the size of the bit length $l$.

**12.** Method according to any one of the claims 1 to 11, **characterised in that** the method is provided to be employed in connection with an RSA encryption method or an RSA decryption method or an RSA verification method or an RSA signature method.

**13.** Method according to any one of the claims 1 to 12, **characterised in that** the method is executed as a partial step in a modular exponentiation.

**14.** Method according to any one of the claims 1 to 13, **characterised in that**, in each of the aforementioned extended Montgomery multiplications of two factors $a$', $b$' with respect to the modulus $n$', wherein the factors $a$', $b$' and the modulus $n$' have the bit length $l$, a first and a second Montgomery multiplication of the bit length $l$ are performed, wherein the factors $a$' and $b$', but different moduli, are used in each of the first and second Montgomery multiplications.

**15.** Method according to claim 14, **characterised in that**, in the first Montgomery multiplication, the value $n$, and in the second Montgomery multiplication, the value $2^l - n$ is used as a modulus.

**16.** Method according to claim 14 or 15, **characterised in that** a case distinction is made for calculating the results of the extended Montgomery multiplication from the results of the first and/ or the second Montgomery multiplication.

**17.** Method according to claim 16, **characterised in that** at least information about the least significant bits of the results of the two Montgomery multiplications and of the product $a \cdot b$ is taken into account in the case distinction.

**18.** Computer program product, comprising program instructions adapted for causing at least one processor to execute a method having the features of one of the claims 1 to 17.

**19.** Portable data carrier, in particular chip card or chip module, which is adapted for executing a method with the features of one of the claims 1 to 17.

**20.** Portable data carrier according to claim 19, **characterised in that** the data carrier has a coprocessor which supports Montgomery multiplications of the bit length $l$.

**Revendications**

**1.** Procédé pour exécuter une multiplication de Montgomery de deux facteurs $a$, $b$ concernant un module $n$ avec l'utilisation d'un coprocesseur, des multiplications de Montgomery assistées avec une longueur de bit $l$ maximale prédéfinie, les facteurs $a$, $b$ et le module $n$ présentant une longueur de bit $L$ prédéfinie, **caractérisé en ce que**

- le calcul de la multiplication de Montgomery avec la longueur de bit $L$ s'appuie sur plusieurs multiplications de Montgomery élargies avec la longueur de bit $l$ inférieure par rapport à la longueur de bit $L$, deux valeurs de résultat $w$ et $k$ de la longueur de bit $l$ étant déterminées lors d'une telle multiplication de Montgomery élargie de deux facteurs $a$', $b$' concernant un module $n$' de telle sorte qu'on a $\omega \cdot 2^l = a' \cdot b' + k \cdot n'$,
- les facteurs $a$, $b$ de la multiplication de Montgomery étant analysés sous la forme de coefficients $a_j$, $b_k$, qui présentent chacun la longueur de bit $l$, et

- au moins certaines paires des coefficients $a_j$, $b_k$ étant utilisées comme facteurs à chaque fois d'une multiplication de Montgomery élargie.

2. Procédé selon la revendication 1, **caractérisé en ce que** la multiplication des facteurs $a$, $b$ est une multiplication de Karatsuba.

3. Procédé selon la revendication 1, **caractérisé en ce qu'**une réduction concernant le module $n$ est obtenue en plusieurs étapes, chaque étape de réduction comprenant au moins une multiplication de Montgomery élargie.

4. Procédé selon l'une quelconque des revendications 1 à 3, **caractérisé en ce que** les facteurs $a$, $b$ et/ ou le module $n$ sont analysés dans une représentation adique $2^l$.

5. Procédé selon la revendication 4, **caractérisé en ce qu'**une valeur $n_0$ est déterminée comme emplacement adique $2^l$ de plus faible valeur du module n.

6. Procédé selon l'une quelconque des revendications 1 à 4, **caractérisé en ce qu'**une valeur $n_0$ est déterminée comme une racine du module $n$ modulo $2^l$ ou comme une racine de la valeur -$n$ modulo $2^l$.

7. Procédé selon la revendication 6, **caractérisé en ce que** le module $n$ est dissocié selon la relation

$$n \;=\; \pm n_0{}^m \;+\; \sum_{i=2}^{m} u_i \cdot n_0{}^{m-i} \cdot 2^{(i-1)\cdot l} \;.$$

8. Procédé selon la revendication 6 ou la revendication 7, **caractérisé en ce que** les facteurs $a$ et $b$ sont dissociés selon les relations suivantes

$$a \;\equiv\; \sum_{i=0}^{m-1} a_i \cdot 2^{(m-1-i)\cdot l} \cdot n_0{}^i \;(\mathrm{mod}\; n)$$

et

$$b \;\equiv\; \sum_{i=0}^{m-1} b_i \cdot 2^{(m-1-i)\cdot l} \cdot n_0{}^i \;(\mathrm{mod}\; n) \;.$$

9. Procédé selon l'une quelconque des revendications 5 à 8, **caractérisé en ce que** la multiplication de Montgomery élargie des coefficients $a_j$, $b_k$ concernant le module $n_0$ ou concernant le module 1 est effectuée.

10. Procédé selon la revendication 3 et l'une quelconque des revendications 5 à 8, **caractérisé en ce qu'**au moins une multiplication de Montgomery élargie de chaque étape de réduction concernant le module $n_0$ ou concernant le module 1 est effectuée.

11. Procédé selon l'une quelconque des revendications 1 à 10, **caractérisé en ce que** la longueur de bit $L$ est deux fois plus grande que la longueur de bit $l$.

12. Procédé selon l'une quelconque des revendications 1 à 11, **caractérisé en ce que** le procédé est prévu pour être utilisé en rapport avec un procédé de codage RSA ou un procédé de décodage RSA ou un procédé de vérification RSA ou un procédé de signature RSA.

13. Procédé selon l'une quelconque des revendications 1 à 12, **caractérisé en ce que** le procédé est exécuté en tant qu'étape partielle dans une exponentiation modulaire.

14. Procédé selon l'une quelconque des revendications 1 à 13, **caractérisé en ce que**, pour chacune desdites multiplications de Montgomery élargies de deux facteurs $a'$, $b'$ concernant le module $n'$, les facteurs $a'$, $b'$ et le module $n'$ présentant la longueur de bit $l$, une première et une seconde multiplications de Montgomery de la longueur de bit $l$ sont exécutées, les facteurs $a'$ et $b'$, mais différents modules, étant utilisés à chaque fois lors de la première et de la seconde multiplications de Montgomery.

15. Procédé selon la revendication 14, **caractérisé en ce que** la valeur $n$ et la valeur $2^l - n$ sont utilisées comme modules respectivement pour la première multiplication de Montgomery et pour la seconde multiplication de Montgomery.

16. Procédé selon la revendication 14 ou 15, **caractérisé en ce qu'**une différenciation de cas est effectuée pour calculer les résultats de la multiplication de Montgomery élargie à partir des résultats de la première et/ ou de la seconde multiplications de Montgomery.

17. Procédé selon la revendication 16, **caractérisé en ce qu'**au moins des informations concernant les bits de plus faible valeur des résultats des deux multiplications de Montgomery ainsi que du produit $a \cdot b$ sont incluses dans la différenciation de cas.

18. Produit de programme informatique, qui présente des instructions de programme qui sont élaborées pour ordonner à au moins un processeur d'exécuter un procédé avec les caractéristiques de l'une des revendications 1 à 17.

19. Support de données portable, en particulier carte à puce ou module à puce, qui est aménagé pour la mise en oeuvre d'un procédé avec les caractéristiques de l'une des revendications 1 à 17.

20. Support de données portable selon la revendication 19, **caractérisé en ce que** le support de données présente un coprocesseur qui assiste des multiplications de Montgomery de longueur de bit l.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4405829 A
- US 5961578 A
- US 5745398 A

**In der Beschreibung aufgeführte Nicht-Patentliteratur**

- ''Increasing the bitlength of a crypto-coprocessor''. **W. Fischer ; J.-P. Seifert.** ''Workshop on Cryptographic Hardware and Embedded Systems 2002 (CHES 2002)'',. Springer-Verlag, 2003, vol. 2523, 71-81
- **A. Menzenes ; P. van Oorschot ; S. Vanstone.** Handbook of Applied Cryptography. CRC Press, 1997, 602-603
- Artikel ''Multiplication of multidigit numbers on automata''. **A. Karatsuba ; Yu. Ofman.** Soviet Physics. Dokladay, 1963, vol. 7, 595-596